# EUROPEAN PATENT SPECIFICATION

(11) **EP 2 903 332 B1**
(45) Date of publication and mention of the grant of the patent: **19.02.2020**
(21) Application number: 14360002.1
(22) Date of filing: 31.01.2014
(51) Int. Cl.: H04W 28/08, H04W 4/08, H04W 28/18

(54) **LOAD BALANCING OF DATA FLOWS**
LASTAUSGLEICH VON DATENSTRÖMEN
ÉQUILIBRAGE DE CHARGE DE FLUX DE DONNÉES

(43) Date of publication of application: 05.08.2015
(60) Divisional application: 20150304.2
(73) Proprietor: Alcatel Lucent, 91620 Nozay (FR)
(72) Inventor: Lim, Seau S., Swindon, Wiltshire SN5 7DJ (GB); Drevon, Nicolas, 91620 Nozay (FR); Puddle, Nicola, Swindon, Wiltshire SN5 7DJ (GB); Palat, Sudeep, Swindon, Wiltshire SN5 7DJ (GB)
(74) Representative: Lichota, Catherine Margaret Timmis

(56) References cited:
- WO-A2-2014/009401
- US-A1- 2014 003 239

## Description

### TECHNICAL FIELD

The disclosed embodiments relate generally to wireless network communication, and, more particularly, to load balancing in heterogeneous wireless communication networks.

### BACKGROUND

User communication devices, such as laptops, tablets, smart phones, also known as user equipment (UE), typically support multiple wireless technologies such as WIFI and Cellular Wireless Technologies such as LTE, CDMA and so on. Standard protocols, such as 3GPP, 3GPP2 and so on define control protocols by which the user equipment can select a component access technology.

Wireless LAN (WLAN) technologies, such as WIFI and WiMAX, are becoming increasingly available.

These services may be offered by the same operator as the wireless cell operator, such as a 3GPP operator, or by a different operator. Depending on load, the network may steer some specific traffic (e.g. traffic of a PDN connection, traffic of a bearer, and traffic of an IP flow) of some of UEs to WiFi for example, but keep the traffic of some of the UEs in the network. This is typically accomplished with reference to the signal strength of the network cell. When the cell is lightly loaded, the network can set the traffic steering signal strength threshold such that only cell edge UEs consider steering to WiFi while cell centre UEs can utilize the network cell for example.

3GPP standards define Access Network Discovery and Selection (ANDSF) methods by which a mobile device identifies which access network to connect to (Network Selection and Inter System Mobility Policy), or which network to route specific IP flows to (Inter System Routing Policy). When ANDSF is used, the ANDSF rules are UE specific, and hence a signal strength threshold can be set differently according to subscriber profile for example. However, when RAN rules or RAN commands apply, such a scheme treats all the UEs the same such that the rules are adhered to by all UEs.

US 2014/003239A1 describes a system and method for providing offload guidance information between a node and user equipment.

WO 2014/009401A2 describes a system and method related to subscriber based cell broadcast.

### SUMMARY

The reader is referred to the appended independent claims. Some preferred features are laid out in the dependent claims.

### BRIEF DESCRIPTION OF THE DRAWINGS

Embodiments will now be described, by way of example only, with reference to the accompanying drawings, in which:
Figure 1 is a schematic representation of wireless telecommunications system according to an example;
Figure 2 is a schematic representation of a policy tree showing a set of parameters for a UE group indication that can be applied for traffic steering policies in ANDSF according to an example;
Figure 3 is a schematic representation of a policy tree showing a set of parameters for a UE group indication included in the policy according to an example; and
Figure 4 is a schematic representation of a policy tree showing a set of parameters for a UE group indication included in the policy at a level down from the position of the parameters as noted with reference to figure 3 according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In some deployments, an operator may want to give preferential treatment depending on some subscriber profile characteristics. In these cases, other than letting a UE using the threshold for signal strength provided by ANDSF, the operator may want to replace the ANDSF threshold by a RAN-based signal strength threshold according to some grouping of the subscribers and/or UEs (e.g. gold/silver/bronze subscribers, subscribers with a particular access service class in UMTS, subscribers with a particular UE access class, UEs used as a MTC device and so on). To provide an operator with a mechanism to control the group of subscribers/UEs that will use the RAN parameter(s), an indication can be sent by the 3GPP RAN to indicate to UEs the group of subscribers/UEs that should use a specific set of RAN parameters. Each group of subscribers/UEs might require a different set of RAN parameters. Also, the RAN can provide multiple set of RAN parameters at the same time to control the traffic steering of different groups.

If a UE matches the indication, and the traffic steering and WLAN selection is at the radio side/access stratum of the UE, the UE can apply the RAN parameters as part of the RAN rules (e.g. the RSRP/RSCP threshold value will be applied to the RAN criteria to steer specific traffic to WiFi or vice versa, the WLAN load threshold value will be applied to the RAN criteria for WLAN selection). Likewise, for the case that the traffic steering and WLAN selection is performed at a higher layer/non-access stratum of the UE (i.e. ANDSF), the UE can apply the RAN parameters (by, for example, replacing the threshold value in the ANDSF rule with the one sent by the RAN) as part of the ANDSF policy/rule if the UE ANDSF policy/rule matches the indication.

According to an example, RAN parameters associated with WLAN network selection and 3GPP-WLAN traffic steering are used by only a group of UEs. Accordingly, load balancing of data flows from selected UE devices between a node of a first radio access network (such as a cellular access network for example) and a node of a second radio access network (such as a WiFi network for example) can be performed. Groups of UE devices can therefore operate under different conditions. That is, different sets of RAN parameters can be used by different groups of UEs.

Grouping can be based on subscriber profile (also called "UE subscription") for example, and/or other UE specific parameters such as an access service class in UMTS, a UE access class (from SIM or USIM), delay tolerance and so on. Thus, the RAN can provide different sets of RAN parameters for use by different groups of UEs at the same time. In an example, a UE can belong to several groups. A UE group priority can therefore be added to the set of RAN parameters associated with a group of UEs in order for a UE to be able to select the most appropriate set of RAN parameters.

According to an example, UEs have pre-assigned radio access network selection and radio traffic steering privileges, which provide an indication of the group(s) that a UE belongs to, and therefore enable specific RAN parameters to be applied for and by a UE. For example, a UE group indication can be related directly to a subscriber profile. That is, each enumeration of the indication represents, for example: Bronze user, Silver user and Gold user, each having different offloading privileges. Other enumeration or numbering can also be used for the subscriber profile. For example, UE group indication can be based on an existing access service class in UMTS, UE access class, and so on.

When a UE receives a broadcast set of RAN parameters, the UE can determine whether to apply the UE group-specific RAN parameters based on the UE group indication and the associated UE group priority. This decision can be done at the radio side of the UE (i.e. access stratum) or at a higher layer of the UE (i.e. non-access stratum). In an example, the former is used for the case when the decision for traffic steering and WLAN selection is done at the access stratum of the UE. The latter is used for the case when the decision for traffic steering and WLAN selection is done at the non-access stratum of the UE. If the decision is performed at the non-access stratum of the UE, the access stratum can forward all RAN parameters, the UE group indication and the associated UE group priority to the higher layer of the UE. Non-access stratum decision making for traffic steering and WLAN selection is performed by ANDSF.

Thus, a UE associated with at least one UE-group and having pre-assigned radio access network selection and radio traffic steering privileges receives UE-group specific radio related parameters from a radio access network. The RAN parameters represent condition information indicative of operating conditions for the network and include data representing a UE group indication and associated UE group priority. That is, the RAN parameters include data that indicates a group of UEs that the RAN parameters are intended for or applicable to. The RAN parameters include network parameters for idle and/or busy mode of operation for example, and typically include cell selection parameters, cell reselection parameters, location updating parameters, paging parameters and so on as is known. According to an example, the parameters also include data representing a UE group indication and associated UE group priority.

A UE that receives the RAN parameters broadcast by the network determines whether to apply them based on the UE group indication and associated UE group priority of the received parameters. For example, a UE can determine from the data representing the UE group indication and associated UE group priority whether it should apply the RAN parameters based on whether it is a member of the indicated group and/or whether the group priority means that a current set of RAN parameters is no longer valid for the UE in question. On the basis of the determination, the UE can apply the UE-group specific parameters, and can offload a data flow to a second radio access network, such as a WiFi access point served by a small cell, if the parameters enable this for the UE.

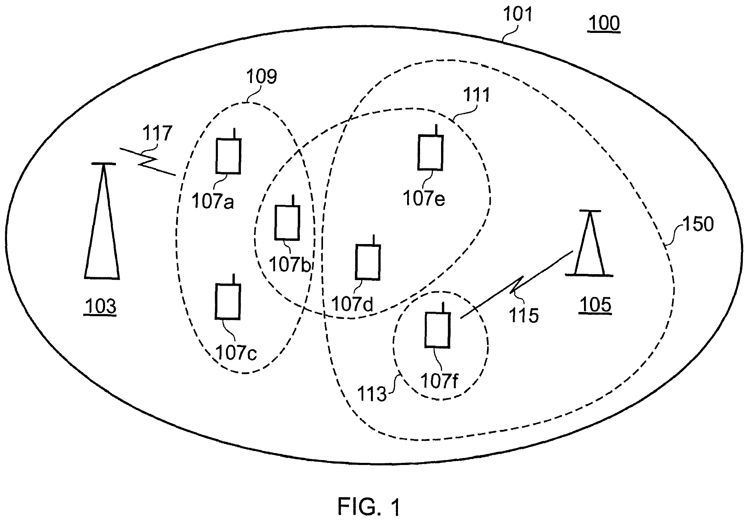

Figure 1 is a schematic representation of wireless telecommunications system according to an example. System 100 comprises a first access network served by a node 103, and a second access network served by a node 105, such as a low power node providing a small cell 150 within the coverage region 101 of the node 103 of the first access network for example. The first access network can be a cellular network (radio access network) for example, and the second access network can be a WiFi network for example. Multiple such nodes 103, 105 can be provided as part of the system 100, but only two such nodes operating within a cell region 101 are depicted for the sake of clarity. Multiple UEs 107a-f operate within the region 101. UEs are pre-assigned to various groups that dictate their radio access network selection and radio traffic steering privileges. Groups 109, 111 and 113 are depicted. For example, UEs 107a-c can be pre-assigned as members of group 109. UEs 107b, 107d and 107e can be pre-assigned to be members of group 111 (note that UE 107b is therefore a member of multiple groups), and UE 107f is the sole member of group 113. A group can therefore include one or more UEs.

A RAN parameter broadcast 117 can be transmitted by node 103 to UEs in region 101. Thus, UEs 107a-f will receive the message 117. The RAN parameter message includes data that indicates a group of UEs that the RAN parameters are intended for or applicable to. In the example of figure 1, the broadcast is intended for UEs in group 113, which in this instance corresponds to UE 107f. The RAN parameters are such, in this example, to enable UE 107f to offload a data flow 115 to node 105. However, as no other UEs in region 101 are members of group 113, they do not apply the RAN parameters that were broadcast and continue to operate as before. Accordingly, UE 107f that has received the RAN parameters broadcast by the node 103 of the first access network determines whether to apply them based on the UE group indication and associated UE group priority of the received parameters.

According to an example, the list of groups a UE belongs to can be provided in the top level of the traffic steering policies (in ANDSF) and so is common to all traffic steering policies. Thus, if the RAN sends a UE group indication to a UE, and the UE group indication value matches one of the groups the UE belongs to, the RAN parameters of the UE group of highest priority can be applied in the traffic steering policies.

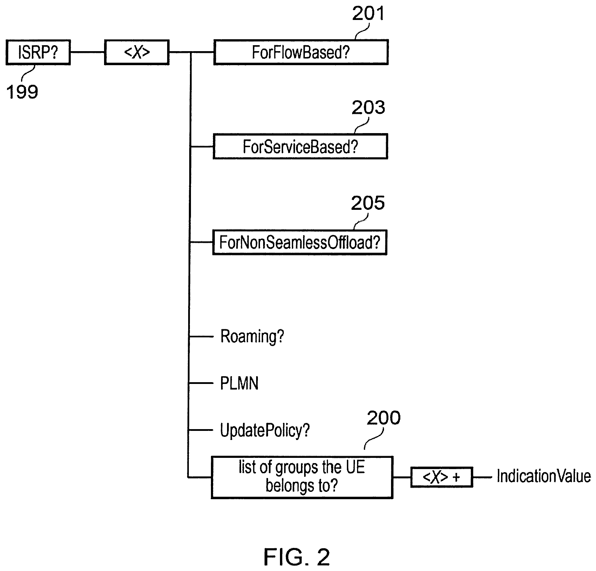

In this connection, figure 2 is a schematic representation of a policy tree showing a set of parameters for a UE group indication that can be applied for traffic steering policies in ANDSF. An Inter-system Routing Policy (ISRP) provides rules for traffic steering between 3GPP and other non-3GPP access points/nodes (such as a WiFi access point for example). Within the ISRP 199, there are FlowBased 201 (i.e. policy based on IP flow), ServiceBased 203 (i.e. policy based on APN - access point name) and NonSeamlessOflload 205 (another policy based on IP flow) policies. A list of UE groups 200 of a UE can be at this level, and independent of the policy used.

The list of groups a UE belongs to can be embedded in a policy (using the MAPCON policy for example; it can equally be applied to NSWO or IFOM policy). Thus, if the RAN sends a UE group indication and a UE group indication value matches one of the values in list of groups a UE belongs to in the policy, the RAN parameters can be applied to the policy.

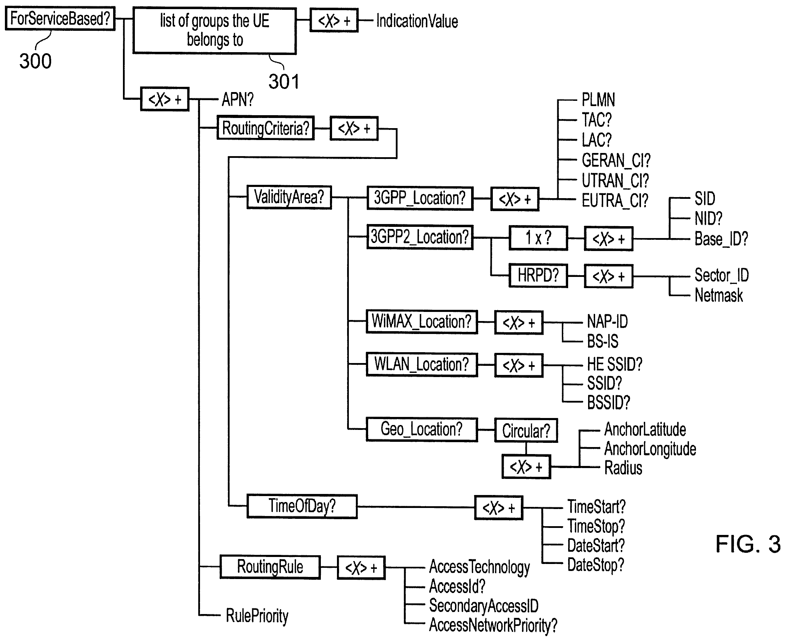

In this connection, figure 3 is a schematic representation of a policy tree showing a set of parameters 301 for a UE group indication included in the policy. That is, instead of putting the UE group indication independent of the policy, it can be included in the policy. In the case of figure 3, it is included in a ServiceBased policy 300.

The list of groups the UE belongs to can be embedded in each rule of the policy. Thus, if the RAN sends the UE group indication and the UE group indication value matches one of the values in the list of groups a UE belongs to in the rules, the RAN parameters of the UE group of highest priority can be applied to the rules associated with an APN or an IP flow. The same principle can be applied to the WLANSP (WLAN selection policy). Alternative ways of taking into consideration of the list of groups the UE belongs to in the ANDSF are not precluded (such as part of routingCriteria or routingRules etc.).

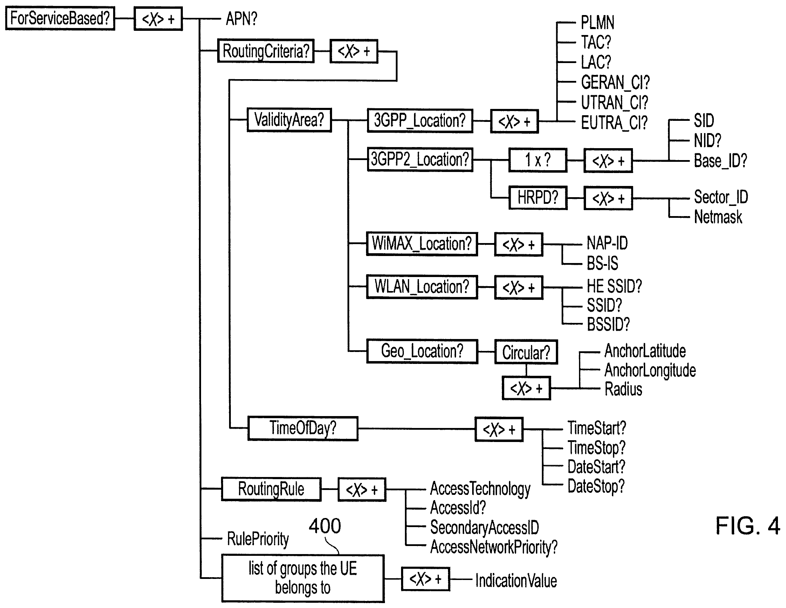

In this connection, figure 4 is a schematic representation of a policy tree showing a set of parameters 400 for a UE group indication included in the policy at a level down from the position of the parameters as noted with reference to figure 3.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning of the claims are to be embraced within their scope.

## Claims

1. A method for performing load balancing of data flows from selected user equipment, UE, devices (107a-f), including:
receiving UE-group specific radio access network, RAN, parameters (117) at a UE device, the device associated with at least one UE-group (109, 111, 113), the at least one UE-group prescribing pre-assigned RAN selection and radio traffic steering privileges for the UE, the UE-group specific RAN parameters representing condition information indicative of operating conditions and including a UE-group indication and associated UE-group priority, wherein the UE-group priority is included in a set of RAN parameters of a UE-group whereby to enable the UE to be able to select a set of RAN parameters in the event that the UE belongs to more than one UE-group;
determining, at the UE, whether to apply the UE-group specific RAN parameters based on the UE-group indication and associated UE-group priority of the received RAN parameters.

2. A method as claimed in claim 1, further including:
on the basis of the determination, applying the UE-group specific RAN parameters; and
offloading a UE data flow on the basis of the applied RAN parameters.

3. A method as claimed in claim 1, further including:
on the basis of the determination, applying the UE-group specific RAN parameters in the event that a UE-group priority associated with a group indication of the received RAN parameters indicates that the UE-group specific parameters are at a higher level of priority than the current RAN parameters of the UE.

4. A method as claimed in any preceding claim, wherein the data flow is offloaded to a WiFi access point (105) served by a small cell (150) within the boundaries of a macro cell (101) served by a first node (103).

5. A method as claimed in any preceding claim, wherein the UE device is associated with multiple groups with respective different priorities and wherein applying the UE-group specific RAN parameters includes applying the RAN parameters of the UE-group of highest priority.

6. A method as claimed in any preceding claim, wherein a UE is pre-assigned to the or each UE-group on the basis of a subscriber profile.

7. A method as claimed in any preceding claim, wherein determining whether to apply the UE-group specific RAN parameters is performed at the radio side / access stratum of the UE.

8. A method as claimed in any of claims 1 to 6, wherein determining whether to apply the UE-group specific RAN parameters is performed at the non-radio side / non-access stratum of the UE.

9. A telecommunications access network, including:
a node (103) adapted to broadcast a signal (117) for the network including UE-group specific RAN parameters representing condition information indicative of operating conditions and including a UE-group indication and associated UE-group priority, wherein the UE-group priority is included in a set of RAN parameters of a UE-group whereby to enable a UE to be able to select a set of RAN parameters in the event that the UE belongs to more than one UE-group;
a UE device associated with at least one UE-group (109, 111, 113), the at least one UE-group prescribing pre-assigned RAN selection and radio traffic steering privileges for the UE, the UE device adapted to receive the broadcast signal and determine whether to apply the UE-group specific RAN parameters based on the UE-group indication and the associated UE-group priority of the received RAN parameters.

10. A telecommunications access network as claimed in claim 9, wherein the UE is adapted to apply the UE-group specific RAN parameters in the event that a UE-group priority associated with a group indication of the received parameters indicates that the UE-group specific RAN parameters are at a higher level of priority than the current RAN parameters of the UE.

11. A UE device (107a-c) associated with at least one UE-group (109, 111, 113), the at least one UE-group prescribing pre-assigned RAN selection and radio traffic steering privileges for the UE, the UE device adapted to determine whether to apply received UE-group specific RAN parameters (117) transmitted by a node (103) of a telecommunications access network based on a UE-group indication and an associated UE-group priority of the received RAN parameters, wherein the UE-group priority is included in a set of RAN parameters of a UE-group whereby to enable the UE to be able to select a set of RAN parameters in the event that the UE belongs to more than one UE-group.

12. A UE device as claimed in claim 11, wherein the UE is adapted to apply the UE-group specific RAN parameters in the event that a UE-group priority associated with a group indication of the received RAN parameters indicates that the UE-group specific RAN parameters are at a higher level of priority than the current RAN parameters of the UE.

13. A UE device as claimed in claim 11, wherein the received RAN parameters include threshold parameters associated with traffic steering between a radio access network and a wireless local area network, WLAN.

14. A computer program product, comprising a computer usable medium having computer readable program code embodied therein, said computer readable program code adapted to be executed to implement the steps of a method for performing load balancing of data flows from selected user equipment, UE, devices as claimed in any of claims 1 to 8.

## Patentansprüche

1. Verfahren zum Ausführen eines Lastausgleichs für Datenströme von ausgewählten Benutzergerätevorrichtungen (User Equipment devices, UE-Vorrichtungen) (107a bis f), aufweisend:
Empfangen von UE-gruppenspezifischen Funkzugangsnetzwerkparametern (Radio Access Network parameters, RAN-Parameter) (117) in einer UE-Vorrichtung, wobei der Vorrichtung mindestens eine UE-Gruppe (109, 111, 113) zugeordnet ist, wobei die mindestens eine UE-Gruppe eine vorab zugeteilte RAN-Auswahl und Privilegien einer Funkdatenverkehrssteuerung für das UE vorschreibt, wobei die UE-gruppenspezifischen RAN-Parameter Bedingungsinformationen repräsentieren, die Betriebsbedingungen anzeigen, und eine UE-Gruppenanzeige und eine zugehörige UE-Gruppenpriorität aufweisen, wobei die UE-Gruppenpriorität in einem Satz von RAN-Parametern einer UE-Gruppe enthalten ist, wodurch das UE befähigt wird, einen Satz von RAN-Parametern auszuwählen, für den Fall, dass das UE zu mehr als einer UE-Gruppe gehört;
Ermitteln in dem UE, ob die UE-gruppenspezifischen RAN-Parameter aufgrund der UE-Gruppenanzeige und der zugehörigen UE-Gruppenpriorität der empfangenen RAN-Parameter anzuwenden sind.

2. Verfahren nach Anspruch 1, das außerdem umfasst:
auf der Grundlage des Ermittelns, Anwenden der UE-gruppenspezifischen RAN-Parameter; und
Umladen eines UE-Datenstroms auf der Grundlage der angewandten RAN-Parameter.

3. Verfahren nach Anspruch 1, das außerdem umfasst:
auf der Grundlage des Ermittelns, Anwenden der UE-gruppenspezifischen RAN-Parameter für den Fall, dass eine UE-Gruppenpriorität, die einer Gruppenanzeige der empfangenen RAN-Parameter zugeordnet ist, anzeigt, dass sich die UE-gruppenspezifischen Parameter auf einer höheren Prioritätsebene befinden als die aktuellen RAN-Parameter des UE.

4. Verfahren nach einem der vorhergehenden Ansprüche, wobei der Datenstrom innerhalb der Grenzen einer Makrozelle (101), die von einem ersten Knoten (103) bedient wird, zu einem Wi-Fi-Zugangspunkt (105) umgeladen wird, der von einer kleinen Zelle (150) bedient wird.

5. Verfahren nach einem der vorhergehenden Ansprüche, wobei der UE-Vorrichtung mehrere Gruppen mit jeweils unterschiedlichen Prioritäten zugeordnet sind und wobei das Anwenden der UE-gruppenspezifischen RAN-Parameter ein Anwenden der RAN-Parameter der UE-Gruppe mit der höchsten Priorität aufweist.

6. Verfahren nach einem der vorhergehenden Ansprüche, wobei ein UE auf der Grundlage eines Teilnehmerprofils vorab der oder jeder UE-Gruppe zugewiesen wird.

7. Verfahren nach einem der vorhergehenden Ansprüche, wobei das Ermitteln, ob die UE-gruppenspezifischen RAN-Parameter anzuwenden sind, auf der Funkseite und/oder in der Zugangsschicht des UE ausgeführt wird.

8. Verfahren nach einem der Ansprüche 1 bis 6, wobei das Ermitteln, ob die UE-gruppenspezifischen RAN-Parameter anzuwenden sind, auf der Nicht-Funkseite und/oder in der Nicht-Zugangsschicht des UE ausgeführt wird.

9. Telekommunikationszugangsnetzwerk, aufweisend:
einen Knoten (103), der geeignet ist zum Verbreiten eines Signals (117) für das Netzwerk, das die UE-gruppenspezifischen RAN-Parameter aufweist, die Bedingungsinformationen repräsentieren, welche die Betriebsbedingungen anzeigen, und eine UE-Gruppenanzeige und eine zugehörige UE-Gruppenpriorität aufweisen, wobei die UE-Gruppenpriorität in einem Satz von RAN-Parametern einer UE-Gruppe enthalten ist, wodurch ein UE befähigt wird, einen Satz von RAN-Parametern auszuwählen, für den Fall, dass das UE zu mehr als einer UE-Gruppe gehört;
eine UE-Vorrichtung, der mindestens eine UE-Gruppe (109, 111, 113) zugeordnet ist, wobei die mindestens eine UE-Gruppe eine vorab zugeteilte RAN-Auswahl und Privilegien einer Funkdatenverkehrssteuerung für das UE vorschreibt, wobei das UE geeignet ist zum Empfangen des Verbreitungssignals und zum Ermitteln, ob die UE-gruppenspezifischen RAN-Parameter aufgrund der UE-Gruppenanzeige und der zugehörigen UE-Gruppenpriorität der empfangenen RAN-Parameter anzuwenden sind.

10. Telekommunikationszugangsnetzwerk nach Anspruch 9, wobei das UE geeignet ist zum Anwenden der UE-gruppenspezifischen RAN-Parameter für den Fall, dass eine UE-Gruppenpriorität, die einer Gruppenanzeige der empfangenen Parameter zugeordnet ist, anzeigt, dass sich die UE-gruppenspezifischen RAN-Parameter auf einer höheren Prioritätsebene befinden als die aktuellen RAN-Parameter des UE.

11. UE-Vorrichtung (107a bis c), der mindestens eine UE-Gruppe (109, 111, 113) zugeordnet ist, wobei die mindestens eine UE-Gruppe eine vorab zugeteilte RAN-Auswahl und Privilegien einer Funkdatenverkehrssteuerung für das UE vorschreibt, wobei die UE-Vorrichtung geeignet ist zum Ermitteln, ob die empfangenen UE-gruppenspezifischen RAN-Parameter (117), die von einem Knoten (103) eines Telekommunikationszugangsnetzwerks übertragen werden, aufgrund einer UE-Gruppenanzeige und einer zugehörigen UE-Gruppenpriorität der empfangenen RAN-Parameter anzuwenden sind, wobei die UE-Gruppenpriorität in einem Satz von RAN-Parametern einer UE-Gruppe enthalten ist, wodurch das UE befähigt wird, einen Satz von RAN-Parametern auszuwählen, für den Fall, dass das UE zu mehr als einer UE-Gruppe gehört.

12. UE-Vorrichtung nach Anspruch 11, wobei das UE geeignet ist zum Anwenden der UE-gruppenspezifischen RAN-Parameter für den Fall, dass eine UE-Gruppenpriorität, die einer Gruppenanzeige der empfangenen RAN-Parameter zugeordnet ist, anzeigt, dass sich die UE-gruppenspezifischen RAN-Parameter auf einer höheren Prioritätsebene befinden als die aktuellen RAN-Parameter des UE.

13. UE-Vorrichtung nach Anspruch 11, wobei die empfangenen RAN-Parameter Schwellenwertparameter aufweisen, die einer Datenverkehrssteuerung zwischen einem Funkzugangsnetzwerk und einem drahtlosen lokalen Netzwerk (Wireless Local Area Network, WLAN) zugeordnet sind.

14. Computerprogrammprodukt, das ein von einem Computer nutzbares Medium umfasst, das einen computerlesbaren Programmcode aufweist, der darin abgelegt ist, wobei der computerlesbare Programmcode geeignet ist, um zum Umsetzen der Schritte des Verfahrens zum Ausführen eines Lastausgleichs von Datenströmen von ausgewählten Benutzergerätevorrichtungen (User Equipment devices, UE-Vorrichtungen) nach einem der Ansprüche 1 bis 8 ausgeführt zu werden.

## Revendications

1. Procédé d'équilibrage de charge de flux de données provenant de dispositifs d'équipements utilisateur, UE, sélectionnés (107a-f), comprenant :
la réception de paramètres (117) du réseau d'accès radio, RAN, spécifique au groupe d'UE au niveau d'un dispositif d'UE, le dispositif étant associé à au moins un groupe d'UE (109, 111, 113), l'au moins un groupe d'UE prescrivant des privilèges d'orientation du trafic radio et de sélection de RAN pré-assignés pour l'UE, les paramètres de RAN spécifiques au groupe d'UE représentant des informations d'état indicatives de conditions de fonctionnement et comprenant une indication de groupe d'UE et une priorité de groupe d'UE associée, où la priorité de groupe d'UE est incluse dans un ensemble de paramètres de RAN d'un groupe d'UE afin de permettre à l'UE de pouvoir sélectionner un ensemble de paramètres de RAN dans le cas où l'UE appartiendrait à plus d'un groupe d'UE ;
la détermination, au niveau de l'UE, s'il convient d'appliquer les paramètres de RAN spécifiques au groupe d'UE sur la base de l'indication du groupe d'UE et d'une priorité de groupe d'UE associée des paramètres de RAN reçus.

2. Procédé tel que revendiqué dans la revendication 1, comprenant en outre :
sur la base de la détermination, l'application des paramètres de RAN spécifiques au groupe d'UE ; et
la décharge d'un flux de données UE sur la base des paramètres de RAN appliqués.

3. Procédé tel que revendiqué dans la revendication 1, comprenant en outre :
sur la base de la détermination, l'application des paramètres de RAN spécifiques au groupe d'UE dans le cas où une priorité de groupe d'UE associée à une indication de groupe des paramètres de RAN reçus indiquerait que les paramètres spécifiques au groupe d'UE sont à un niveau de priorité plus élevé que les paramètres de RAN actuels de l'UE.

4. Procédé tel que revendiqué dans l'une quelconque des revendications précédentes, dans lequel le flux de données est déchargé vers un point d'accès WiFi (105) desservi par une petite cellule (150) dans les limites d'une macrocellule (101) desservie par un premier nœud (103) .

5. Procédé tel que revendiqué dans l'une quelconque des revendications précédentes, dans lequel le dispositif UE est associé à plusieurs groupes ayant des priorités respectives différentes et dans lequel l'application des paramètres de RAN spécifiques au groupe d'UE comprend l'application des paramètres de RAN du groupe d'UE ayant la priorité la plus élevée.

6. Procédé tel que revendiqué dans l'une quelconque des revendications précédentes, dans lequel un UE est pré-assigné à un ou à chaque groupe d'UE sur la base d'un profil d'abonné.

7. Procédé tel que revendiqué dans l'une quelconque des revendications précédentes, dans lequel la détermination du fait qu'il convient, ou non, d'appliquer les paramètres de RAN spécifiques au groupe d'UE est effectuée du côté radio/strate d'accès de l'UE.

8. Procédé tel que revendiqué dans l'une quelconque des revendications 1 à 6, dans lequel la détermination du fait qu'il convient, ou non, d'appliquer les paramètres de RAN spécifiques au groupe d'UE est effectuée du côté non-radio/non-strate d'accès de l'UE.

9. Réseau d'accès de télécommunication, comprenant :
un nœud (103) adapté pour diffuser un signal (117) pour le réseau comprenant des paramètres de RAN spécifiques au groupe d'UE représentant des informations d'état indicatives de conditions de fonctionnement et comprenant une indication de groupe d'UE et une priorité de groupe d'UE associée, où la priorité de groupe d'UE est incluse dans un ensemble de paramètres de RAN d'un groupe d'UE afin de permettre à un UE de pouvoir sélectionner un ensemble de paramètres de RAN dans le cas où l'UE appartiendrait à plus d'un groupe d'UE ;
un dispositif d'UE associé à au moins un groupe d'UE (109, 111, 113), l'au moins un groupe d'UE prescrivant des privilèges d'orientation du trafic radio et de sélection de RAN pré-assignés pour l'UE, le dispositif d'UE étant adapté pour recevoir le signal diffusé et déterminer s'il convient d'appliquer, ou non, les paramètres de RAN spécifiques au groupe d'UE sur la base de l'indication du groupe d'UE et de la priorité de groupe d'UE associée des paramètres de RAN reçus.

10. Réseau d'accès de télécommunication selon la revendication 9, dans lequel l'UE est adapté pour appliquer les paramètres de RAN spécifiques au groupe d'UE dans le cas où une priorité de groupe d'UE associée à une indication de groupe des paramètres reçus indiquerait que les paramètres de RAN spécifiques au groupe d'UE sont à un niveau de priorité plus élevé que les paramètres de RAN actuels de l'UE.

11. Dispositif d'UE (107a-c) associé à au moins un groupe d'UE (109, 111, 113), l'au moins un groupe d'UE prescrivant des privilèges d'orientation du trafic radio et de sélection de RAN pré-assignés pour l'UE, le dispositif d'UE étant adapté pour déterminer s'il convient d'appliquer, ou non, des paramètres de RAN spécifiques au groupe d'UE reçus (117) transmis par un nœud (103) d'un réseau d'accès de télécommunication sur la base d'une indication de groupe d'UE et d'une priorité de groupe d'UE associée des paramètres de RAN reçus, où la priorité de groupe d'UE est incluse dans un ensemble de paramètres de RAN d'un groupe d'UE afin de permettre à l'UE de pouvoir sélectionner un ensemble de paramètres de RAN dans le cas où l'UE appartiendrait à plus d'un groupe d'UE.

12. Dispositif d'UE tel que revendiqué dans la revendication 11, dans lequel l'UE est adapté pour appliquer les paramètres de RAN spécifiques au groupe d'UE dans le cas où une priorité de groupe d'UE associée à une indication de groupe des paramètres de RAN reçus indiquerait que les paramètres de RAN spécifiques au groupe d'UE sont à un niveau de priorité plus élevé que les paramètres de RAN actuels de l'UE.

13. Dispositif d'UE tel que revendiqué dans la revendication 11, dans lequel les paramètres de RAN reçus comprennent des paramètres de seuil associés à l'orientation du trafic entre un réseau d'accès radio et un réseau local sans fil, WLAN.

14. Produit programme informatique, comprenant un support utilisable par ordinateur dans lequel est intégré un code de programme lisible par ordinateur, ledit code de programme lisible par ordinateur étant adapté pour être exécuté pour mettre en œuvre les étapes d'un procédé pour effectuer l'équilibrage de charge des flux de données provenant de dispositifs d'équipements utilisateur, UE, sélectionnés, tel que revendiqué dans l'une quelconque des revendications 1 à 8.
